# EUROPEAN PATENT APPLICATION

(11) **EP 1 614 616 A2**
(43) Date of publication of application: **11.01.2006**
(21) Application number: 05250072.5
(22) Date of filing: 08.01.2005
(51) Int. Cl.: B62M 1/04

(54) **Human-powered vehicles, drive systems and suitable protective tracks**

(30) Priority: 05.07.2004 GB 0415021
(71) Applicant: Cruft, Patrick Sebastian Eugene, Honiton, Devon EX14 9JZ (GB)
(72) Inventor: Cruft, Patrick Sebastian Eugene, Honiton, Devon EX14 9JZ (GB)
(74) Representative: Brown, Michael Stanley

(57) **Abstract**

A human-powered wheeled vehicle has a wheeled frame, a seat for the rider of the vehicle, a pair of levers (2D) arranged for pivotal movement about a common axis, a sprocket arranged for rotation about same common axis, clutch means or other means whereby movement of a lever (2D) in a first direction about the common axis is transmitted to the sprocket whereas movement of a lever (2D) in a direction opposite to said first direction is not transmitted to the sprocket, and means for the transmission of drive from the sprocket to a wheel of the vehicle, the arrangement being such that, when the rider is sitting on the seat, the rider's feet can act on the levers (2D) so that alternate extension of the driver's legs results in alternate pivotal movement of the levers (2D).

## Description

### Field of the Invention

This invention relates to human-powered wheeled vehicles, and to drive systems for such vehicles, together with other forms of transport, such as boats, light aircraft etc., and other devices powered by rotational members, such as electricity generators.

It is an object of the present invention to provide a man-powered vehicle with as many practical benefits as possible, and a system of protective tracks to enhance those benefits.

The theoretical basis of the invention is summed up by the formula 'torque = power x perpendicular distance',
where the perpendicular distance is the distance from the axle at which power is exerted at 90 degrees - i.e. the length of the crank.

Present methods of utilising the power of the human leg are generally rotational and consist of cranks of a length restricted to approx 0.15 m (due to the limitations of length imposed by the human leg) that rotate around a central axle.

In embodiments of the invention, cranks of many times the above 0.15m length can be utilised, and the torque generated by a human leg exerting constant power can be multiplied by corresponding factors. (The leg is generally the strongest human limb, hence its use).

Theoretical comparisons of torque output are thus:

| | Force | lever-length | kg/metre | Newton-metres |
|---|---|---|---|---|
| Bicycle | 25kg | 0.15 metres | 3.75 | 375 |
| Vehicle of the invention | 25kg | 1.5 metres | 37.5 | 3750 |

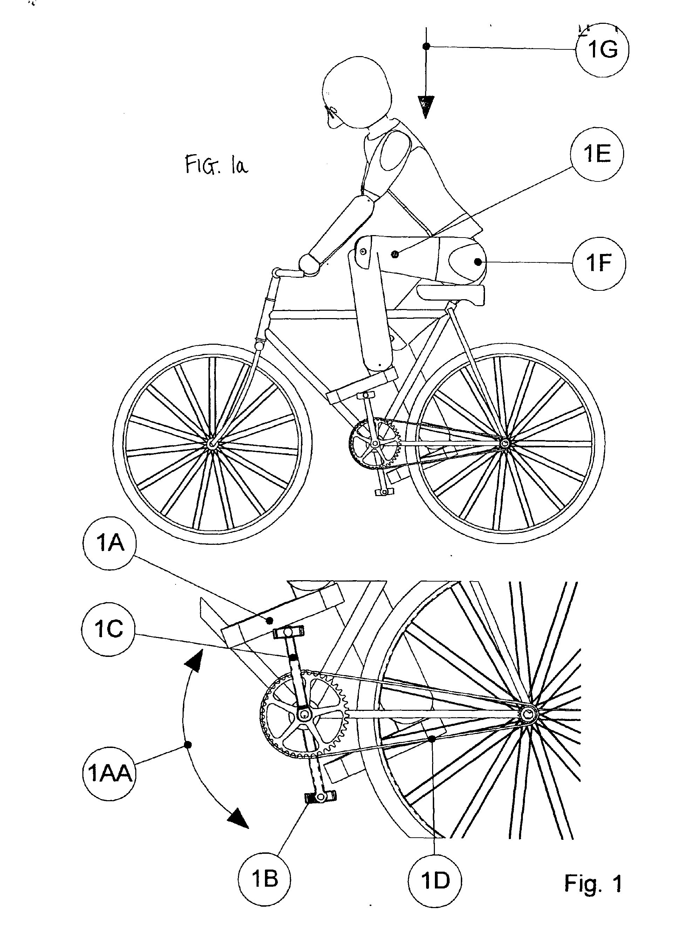

Figures 1 and 1a of the drawings show a conventional bicycle and, as can be seen, a force is applied by the rider of the bicycle by the action of the rider's foot 1A to the pedal 1B of the cycle so that, during the arc 1AA, a substantial downward force is applied. The applied force produces a turning moment about the axis of the sprocket wheel and the torque that is obtained equals the applied force X the length of the pedal arm 1C. This torque is transmitted by the chain 1D to the rear wheel of the cycle. As the rider presses down on the pedal 1B, the rider's upper leg 1E pivots about the point 1F. The vertical arrow 1G shows the downward force of gravity. The rider's body weight is a factor in the downward force that the rider can exert on pedal 1B.

The length of the pedal crank arm 1C is limited by the fact that the rider's feet must at all times remain clear of the ground and by the limited potential for vertical and horizontal movement of the human legs. The axis about which the pedal crank arms rotate is at substantially the same level as the axes about which the wheels rotate and, although the bicycle is a widely used form of transport, the efficiency thereof is significantly limited. For example, the downwardly applied force acts only through a relatively small proportion of a complete revolution of the sprocket, the rider's leg joints are subjected to substantial loads, and there is no support for the back (other than on recumbent bicycles).

Further disadvantages of most examples of the contemporary bicycle are:
a) its high centre of gravity and two wheeled configuration, which render it liable to fall over, potentially causing severe injury to the rider;
b) its vulnerability in traffic, the degree to which it is affected by head- or side-winds, and the lack of weather protection, including the fact that when the bicycle is at rest, the rider must place his feet on the ground, even if the bicycle is in mud or a pool of water;
   For both the above reasons, cycling to school or work is not nowadays generally regarded as safe. Cyclists wear reflective waistcoats and armbands, and impact-absorbing helmets. Cycling remains a popular activity, but is nowadays chiefly for leisure rather than practical travel.
c) its lack of speed. In practice, most riders will achieve a cruising speed of approx 12 mph on a bicycle. If a journey of 120 miles is considered, this journey will be possible in 2 hours (at 60 mph) in a motorcar, but will take at least 10 hours on a conventional bicycle. (Faster human-powered vehicles - often of 'recumbent' configuration - are in use at present, and speeds of more than 70 mph have been achieved by athletes in aerodynamic human-powered vehicles, but these have taken place under test-conditions, on long, flat roads at high altitudes with reduced air-resistance).

In general, for a person who wishes to make a journey within a limited time, do a day's work, take part in a business meeting or make a visit, and return to base (preferably with a briefcase and/or laptop computer), the lack of cruising speed competitive to motor-powered vehicles is a serious disadvantage for present human-powered vehicles, and a general restriction to their utility.

It is an object of the present invention to provide a system that will make human-powered travel more practical than at present.

Motor-cycles can have the advantage of high speed, depending on model, but are widely recognised to be very dangerous due to their high power-to-weight ratio, high centre-of-gravity and two-wheeled configuration. They are noisy and polluting. Most provide no protection against impact or weather, and riders wear thick leather clothing and protective helmets and boots.

The type of vehicle that is most widely used at present is the motor car/automobile (a self-moving vehicle, with power from an internal combustion engine, an electric supply, or a combination of these). Disadvantages of these vehicles are:
1) the motive apparatus (internal combustion engine plus petroleum or LPG tank and fuel, or electric motor and battery) is heavy; a vehicle designed to accommodate the weight and power of such apparatus has to be strong, and this strength implies further weight; typically, even small vehicles of this type weigh at least 800kg, whereas an average human being weighs only 80kg. In a typical small vehicle of 800kg, when transporting a single driver, the weight ratio is thus - vehicle 10: driver 1. Even when fully loaded (say with 5 people @ 80 kg), the weight ratio will be:
   vehicle - 800kg : driver and 4 passengers - 400kg,
   or vehicle - 2 : driver and 4 passengers - 1;
2) a very high proportion of the vehicle's weight is thus dedicated to moving the vehicle itself, whereas the raison d'etre of the vehicle is the movement of its human occupants;
3) the inherent inefficiency described in 2) above has implications in the high financial and environmental costs of making and running such vehicles - in the consumption of fossil and other fuels, the creation of CO2 and other polluting by-products, and in the financial expense and burden of pollution from the making of roadways and other structures suitable for the above vehicles;
4) in recent years, factors relating to the availability of petroleum products have been important, and implicated in the cause of conflicts, in national and international politics;
5) road-traffic accidents cause death and injury. The high weight of the automobile contributes to impact-damage, and the presence of flammable/explosive fuel adds to the inherent dangers;
6) traffic-congestion, both on the road and when parking, is a widely-recognised disadvantage of contemporary life. Because of the inherent cost of motor vehicles, most are sold with four- or five-seat configuration although the majority of journeys are made by a solo driver. It is thus an object of the present invention to provide a vehicle that can be produced in a single or multi-seat version. In a single-seat version, it will cover less than half of the ground-area of an average contemporary car (which will have a beneficial effect on traffic-congestion), and can be parked vertically, which will further reduce its ground area, and the congestion element of parked vehicles.
7) lack of exercise, particularly but not exclusively in children, is associated with an increase in obesity. One of the objects of the present invention is to increase the safety and effectiveness of human-powered transport, thus making it more attractive and more 'user-friendly', and, it is hoped, increasing the number of people who choose to use it, and the frequency with which people choose to use it;
8) 'Road Rage' is a term used by the British media to describe the anger and frustration experienced by people travelling in a stressed state without the relief accorded by the Endorphins that are released during physical exercise. It is an object of the present invention to reduce the prevalence of this condition by making it practical for people to increase the proportion of journeys undertaken using their own capacity for physical exertion;
9) ever since the Industrial Revolution, the contrast between the power and potential of machines powered by combustible materials or electricity and that of human beings has tended to create a feeling of impotence and inferiority in people. It is an object of the present invention to rebuild the confidence of human beings in what they can achieve by their own efforts;
10) the purchase and running costs of travel by means of machines powered by combustible materials or electricity remains a significant part of the budgets of many people and organisations. This can have a negative effect on the employment and social opportunities available to people who do not have financial resources. It is an object of the present invention to bring the ability to travel reasonable distances in safety and comfort to people who cannot afford motorised travel. It is also an object of the present invention to make available more money for individuals, organisations and governments to spend on worthwhile activities.

Public Transport (chiefly buses and railways) is widely regarded as an energy-efficient means of transporting people. In practical terms, however, it has the following disadvantages:
1) the traveller is unlikely to be taken to his or her exact destination. This is a disadvantage by comparison with a car. It may mean walking a long way, possibly in bad weather or an unwelcoming neighbourhood;
2) public transport is not available at all times or in all places;
3) in 'rush-hour' periods, it is often over-crowded, hot and uncomfortable. At other times buses and trains sometimes run nearly empty, which is inefficient.

It is accordingly an object of the present invention to provide an improved form of human-powered vehicle, together with other relevant forms of transport and devices.

A further object of the present invention is to provide an improved protective carriageway suitable for this improved human-powered vehicle.

### Summary of the Invention

According to a first aspect of the present invention there is provided a human-powered wheeled vehicle having a wheeled frame, a seat for the rider of the vehicle, a pair of levers arranged for pivotal movement about a common axis, a sprocket arranged for rotation about said common axis with an idler to reverse the direction of drive, clutch means whereby movement of a lever in a first direction about the common axis is transmitted to the sprocket whereas movement of a lever in a direction opposite to said first direction is not transmitted to the sprocket, means for the transmission of drive from the sprocket to a wheel of the vehicle, and sliders movable along slideways, the sliders being connected to the levers and the arrangement being such that, when the rider is sitting on the seat, the rider's feet can act on the sliders to effect movement of the levers so that alternate extension of the driver's legs results in alternate pivotal movement of the levers.

This second aspect of the invention allows an increased length of lever (and thus an increased contribution to torque) by comparison with the first aspect, while a low centre of gravity is again maintained.

The connections of the sliders to the levers preferably comprise belts, cords or rods. Spring means, return-levers, pneumatically operated means or other effective means is preferably provided for moving the sliders in the direction opposite to that in which they are moved on extension of the rider's legs so that, after completion of a working movement of one leg by the rider, that leg and the relevant lever are returned to their original position by the spring means or the pneumatically operated means or other effective means, and the other leg of the rider is extended by the rider while the one leg is being returned to its original position.

The slideways are preferably arranged horizontally and are preferably so located that the part of the seat that supports the weight of the rider of the vehicle is at substantially the same height as the slideways.

An alternative is the provision of a toothed rack or ratchet placed beneath each pedal in guides and attached to that pedal in such a way that forward rotation of that pedal turns a pinion that houses a sprag clutch. The forward rotational movement of the sprag clutch preferably causes said sprag clutch to engage with a drive-axle, and transmit forward rotational movement to said drive-axle (this forward rotational movement of the drive-axle being furthered by a flywheel). This forward rotational movement of the drive-axle is preferably transmitted by a chain, toothed belt or similar device via appropriate gearing to the driven axle that terminates in the driven wheels.

Human bodies vary considerably. In the case of a small person, the distance between a foot on the end of a fully-extended leg (as at the end of a propulsive stroke), and a foot on the end of a fully-retracted leg (drawn back before making a propulsive stroke) may be approx. 40 cm. In the case of a large person, this distance may be approx. 80 cm. It is advantageous for all riders to be able to exert as long a power-stroke as possible with regard to the drive-levers, because a longer power-stroke maximises the 'arc of engagement' of the levers' connection with the driven axle, while a shorter power-stroke leads to a reduced 'arc of engagement' (as explained below). The longer the 'arc of engagement', the higher the proportion of the forward movement of the drive-lever which exerts turning power on the axle - a factor that becomes more important the longer the lever used.

For the above reason, a 'leg-length equaliser' may be provided. This is preferably a dual-action disc, mounted on an axle with a torsion spring giving a selectable return-force.

According to a second aspect of the present invention there is provided a human-powered wheeled vehicle having a wheeled frame, a seat for the rider of the vehicle, a pair of levers arranged for pivotal movement about a common axis, a sprocket arranged for rotation about same common axis, clutch means or other means whereby movement of a lever in a first direction about the common axis is transmitted to the sprocket whereas movement of a lever in a direction opposite to said first direction is not transmitted to the sprocket, and means for the transmission of drive from the sprocket to a wheel of the vehicle, the arrangement being such that, when the rider is sitting on the seat, the rider's feet can act on the levers so that alternate extension of the driver's legs results in alternate pivotal movement of the levers.

Spring means, reversing levers, pneumatically operated means or other effective means is preferably provided for moving the levers in the direction opposite to the first direction so that, after completion of a working movement of one leg by the rider, that leg and the relevant lever are returned to their original position by the spring means, reversing levers, the pneumatically operated means or the other effective means, and the other leg of the rider is moved by the rider through a working movement while the one leg is being returned to its original position.

The length of the levers is not limited by the constraints that affect a conventional bicycle; maximum practicable length contributes to maximum torque, but a telescopic or slide-adjustable lever may be provided that enables the rider to reduce this length at will (e.g. for safe progress in slow-moving traffic).

The action of the human body using the vehicle of the invention enables a stronger set of muscles to be employed than in the case of a conventional bicycle, and particularly the 'glutaeus maximus', which is the strongest muscle in the body.

Similar levers for operation by the arms may be used in addition to the leg-operated levers.

It will be appreciated that the vehicle of the present invention maintains a low centre of gravity, with corresponding safety benefits.

Pedals for engagement by the feet of the rider are preferably pivotally mounted on the levers at the upper ends thereof (and the heels are preferably supported by suitable footrests), the levers preferably being arranged for pivotal movement from a position spaced angularly a predetermined amount from the vertical to a position spaced substantially the same angular amount on the other side of the vertical.

The part of the seat that supports the weight of the rider of the vehicle is preferably at substantially the same height as the pedals so that the legs of the rider move substantially horizontally during extension thereof and during return movement thereof. The back of the seat thus functions as a 'backstop', enabling the rider to exert a power that is not limited by bodyweight/gravity. Moreover, because the rider's feet move alternately forwards and backwards, each foot can exert forward power for substantially 50% of the time, so that the vehicle can receive forward power for substantially 100% of the time.

A flywheel may be mounted on the wheeled frame and the arrangement will then be such that pivotal movement of the levers causes rotation of the flywheel, which provides a momentum reservoir so as to ensure that the rate of travel of the vehicle is more uniform. A clutch and/or a brake acting on the flywheel are optionally provided in order to enable the rider to slow the vehicle while retaining the momentum reservoir ― if a re-acceleration is anticipated - or arresting the vehicle totally ― if a total stop is required.

### Brief Description of the Drawings

Figures 1 and 1a referred to above show a conventional bicycle,
Figure 2 is a side view of a first embodiment of human-powered vehicle in accordance with the present invention,
Figure 2a shows a detail of the vehicle shown in Figure 2,
Figure 3 is a perspective view of part of the vehicle of Figure 2 showing the use of spring means for returning the foot-operated levers to their original positions,
Figure 3a is a perspective view of part of the vehicle of Figure 2 showing the use of pneumatic piston and cylinder mechanisms for returning the foot-operated levers to their original positions,
Figure 3b shows an alternative positioning of the arrangement of sprag clutches and levers,
Figure 3c shows a further alternative positioning of sprag clutches and levers,
Figure 3d shows an alternative arrangement whereby rotational movement is transmitted to a drive-axle by forward movement of a pedal-and-rack or pedal-and-ratchet assembly (one for each of the driver's feet), which acts on a pinion which contains a sprag clutch. The rotational movement transmitted to the drive-axle (and furthered by a flywheel) is transmitted via a chain, toothed belt or similar device (and appropriate gearing) to the driven axle of the vehicle that terminates in the driven wheels.
Figures 4a, 4b, 4c and 4d show an enclosed form of the vehicle shown in Figure 2, and illustrate the facility to park vertically,
Figure 5 is a side view of a modified form of the vehicle shown in Figure 2, showing the provision of an additional sprocket and chain system so that an increased drive ratio is obtained,
Figure 6 is a side view of a second embodiment of human-powered vehicle in accordance with the present invention,
Figure 6a is a perspective view of the vehicle shown in Figure 6,
Figure 7 shows the opposite side of the vehicle shown in Figure 6,

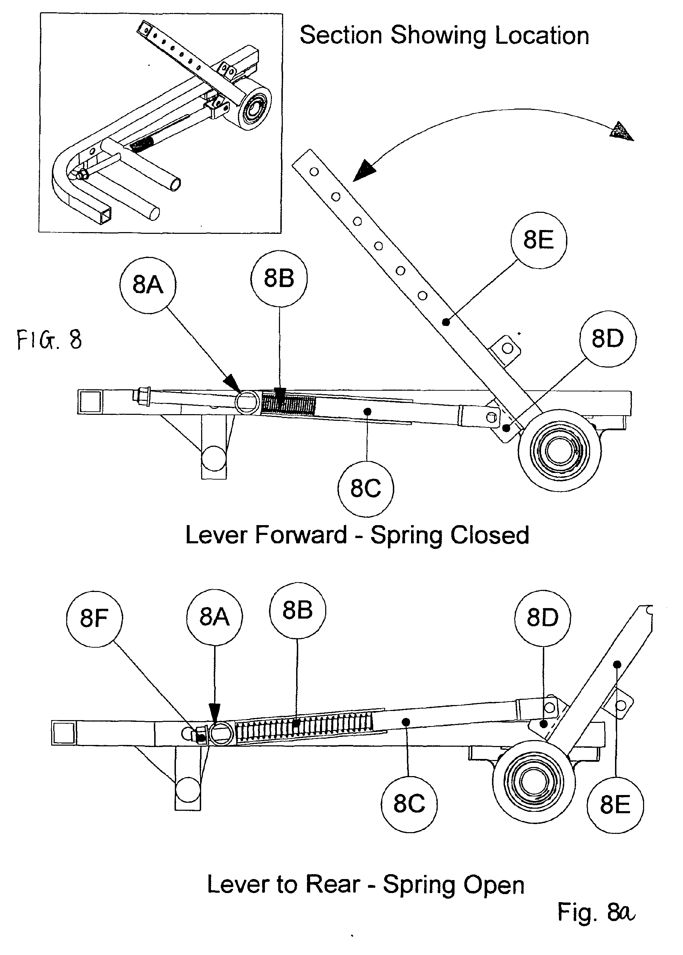

Figures 8 and 8a are detail views showing part of the vehicle of Figure 2,

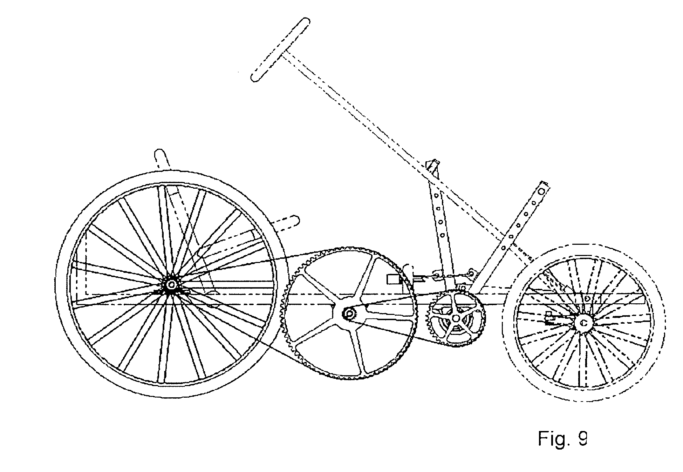

Figure 9 is a side view of a vehicle as shown in Figures 2 - 6,

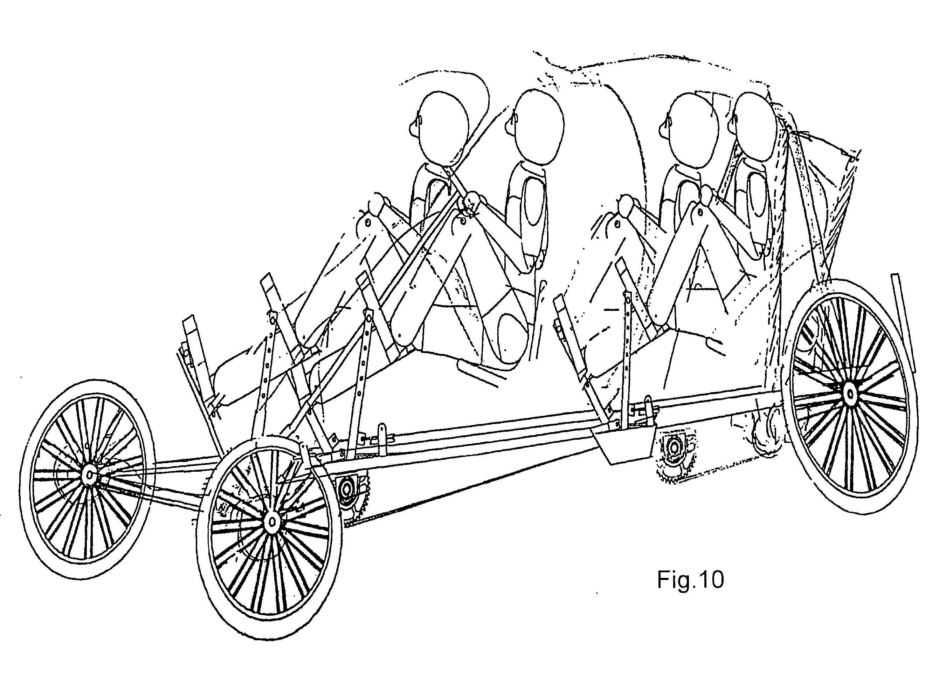

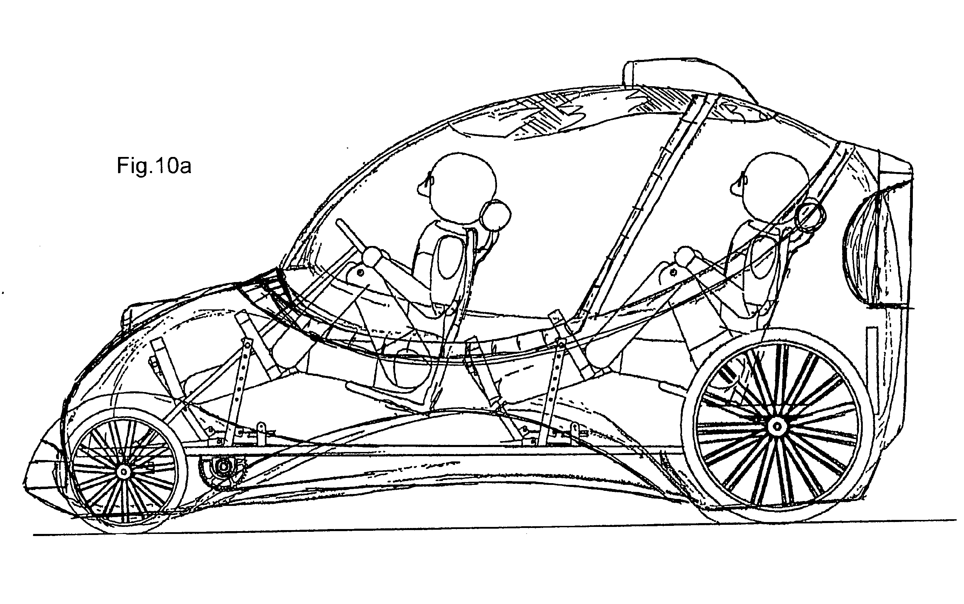

Figures 10 and 10a show a multi-person vehicle of the invention, with and without bodywork,
Figure 11 (main drawing) shows a cross-section of a bidirectional version of the carriageway of the present invention, including provision of upper and lower ventilation louvers capable of being opened and closed, windows, an empty lane for emergency services, and south-facing solar panels to provide power for the automatic ventilation control, LCD directional signs, low-energy lighting etc.
   The inset drawing shows a single direction version suspended over the hard shoulder of a motorway, roadway, railway, cycleway, river or waterway, or other suitable feature.

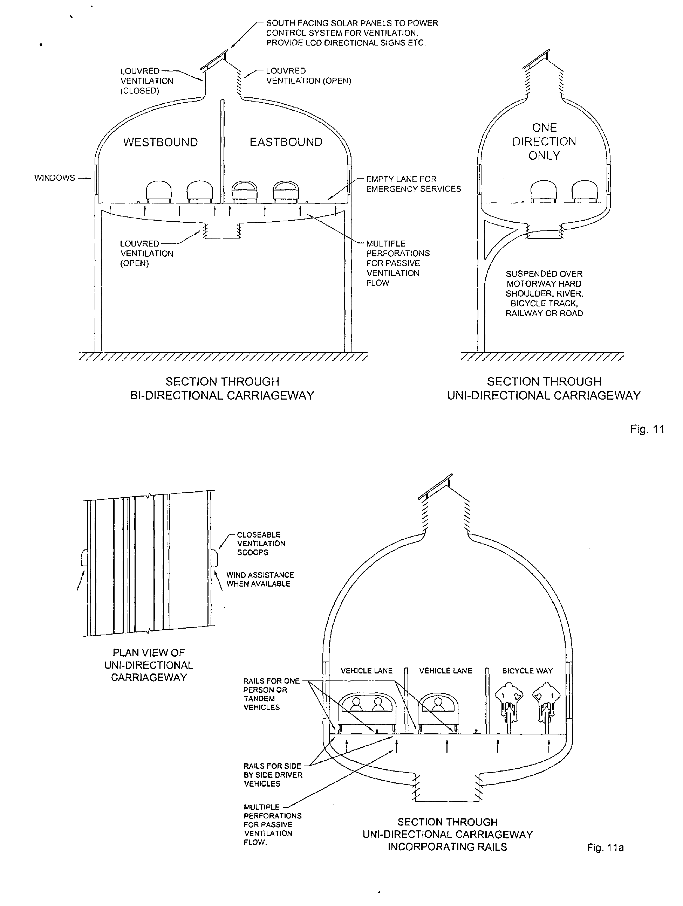

Figure 11a shows a section through a uni-directional carriageway of the invention containing three lanes. Two lanes are intended for vehicles of the invention fitted with flanged wheels, and are provided with rails. In each lane, three rails are provided. In the case of single-person vehicles or multi-person vehicles of tandem configuration, the narrower pair of rails is used. In the case of vehicles for multi-person vehicles of side-by-side configuration, the wider pair of rails is used. The third lane, which has no rails, is intended for bicycles, tricycles or other human-powered vehicles that do not possess flanged wheels.
   In order to permit a passive airflow from the lower louvers to the upper louvers, the horizontal roadway surface contains multiple perforations.
   The inset drawing shows a plan drawing of the above uni-directional carriageway, and includes controllable air scoops that can open to give wind assistance to the riders when appropriate.

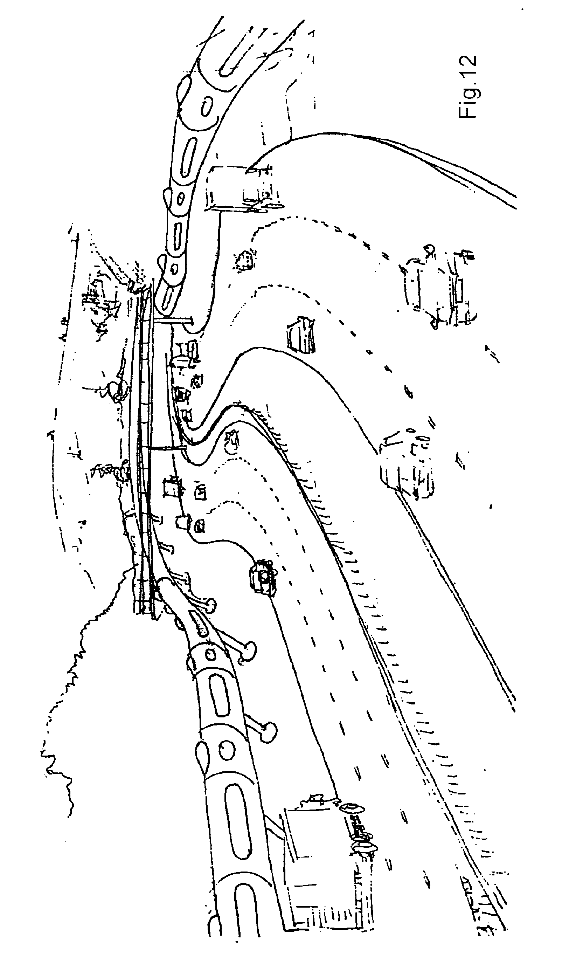

Figure 12 is an artist's impression of two substantially tubular single carriageways (in this case, although not necessarily, prefabricated in long straight sections and shorter curved sections) adjoining an existing dual-carriageway roadway.
Figure 13a shows the forward section of the leg-length equaliser disc,

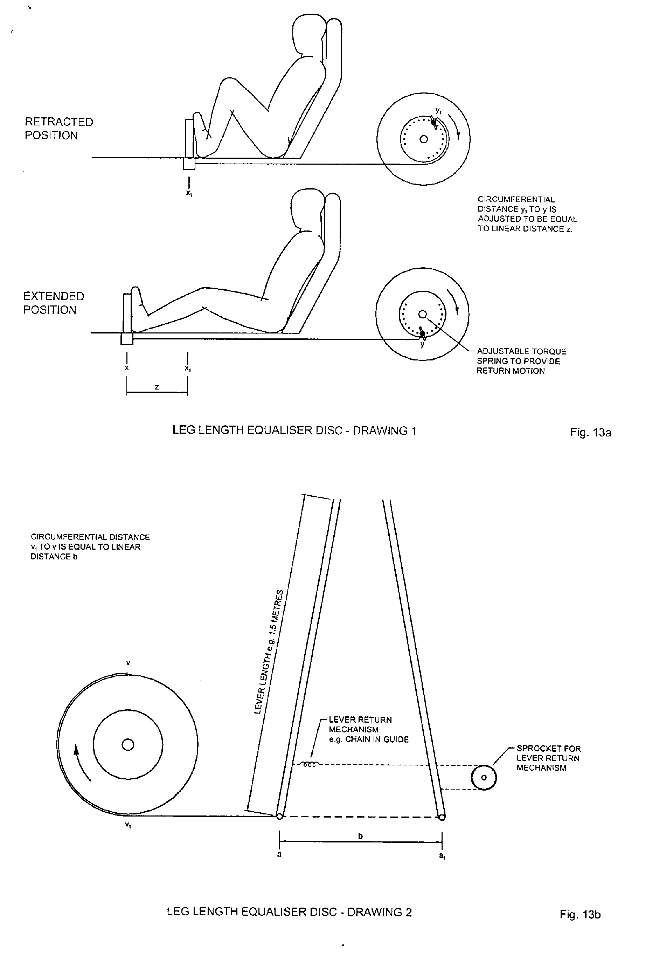

Figure 13b shows the second section of the leg-length equaliser disc,
Figure 13c shows a plan view of the entire leg-length equaliser disc mechanism,

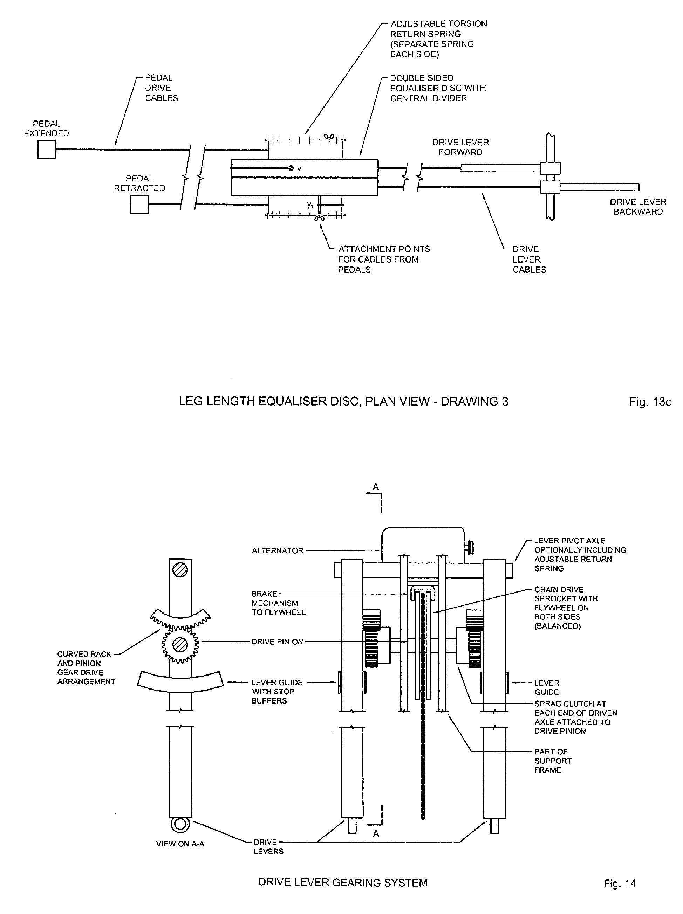

Figure 14 shows a front and side view of the drive lever gearing system, which uses a curved rack and a drive pinion in order to counter the negative effect of the short 'arc of engagement' caused by the long levers.

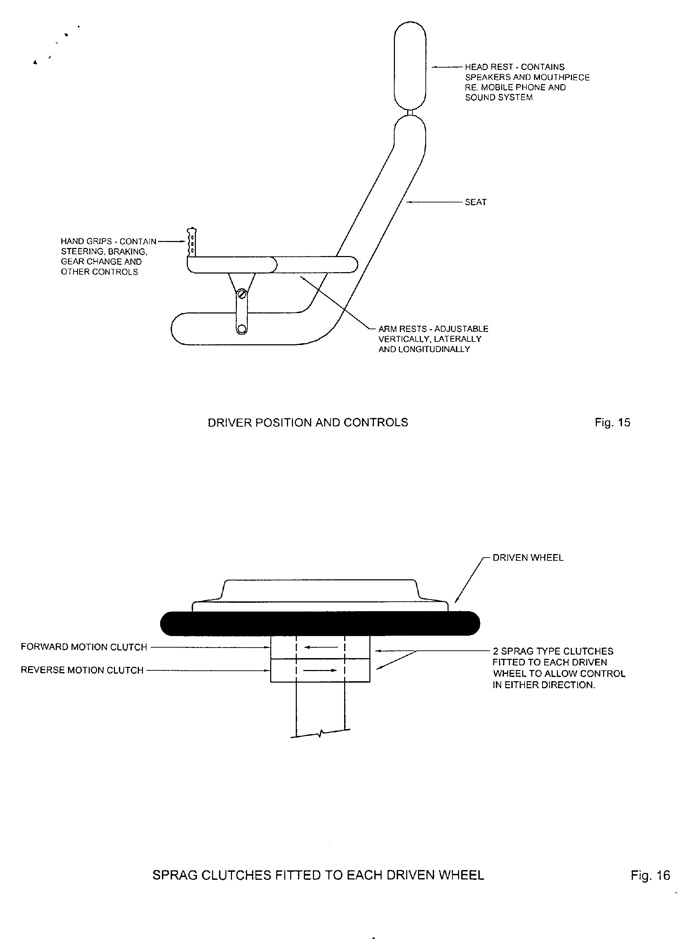

Figure 15 shows the driver's seat/position and controls, including the combination of handgrips and control elements,
Figure 16 shows the use of sprag clutches in conjunction with each driven wheel in place of a 'differential' to give rotary motion to the wheel, and to give increased rotary motion to whichever wheel is on the outer curve of a turn of the vehicle.

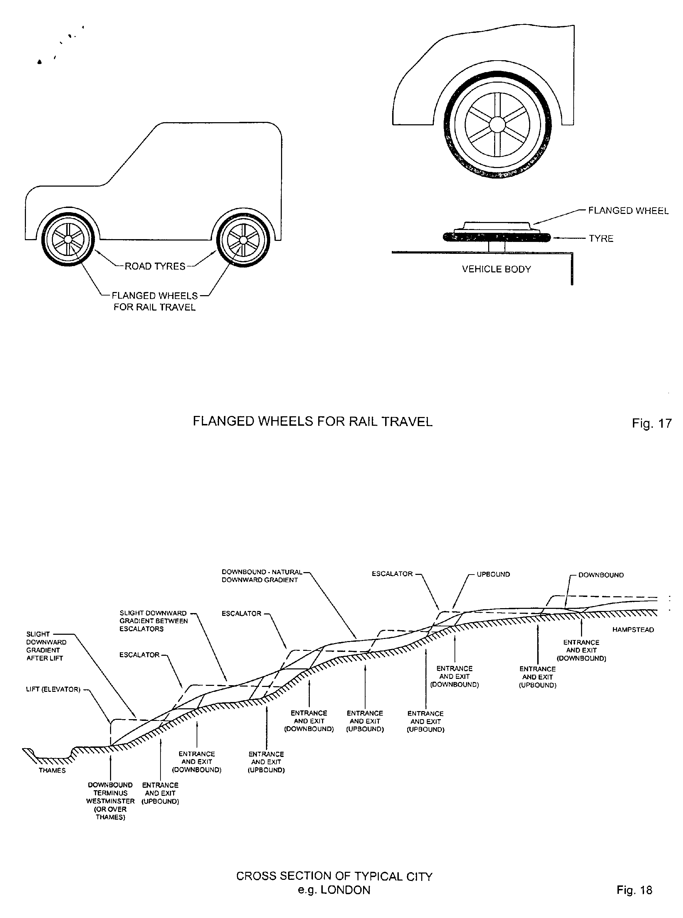

Figure 17 shows the use of dual-purpose wheels, with inner tyres for road travel, and smaller-diameter outer flanged sections for use on rails.
Figure 18 shows a cross-section of a typical city, with separate downbound and upbound carriageways, and lifts/elevators and escalators on the upbound carriageway,

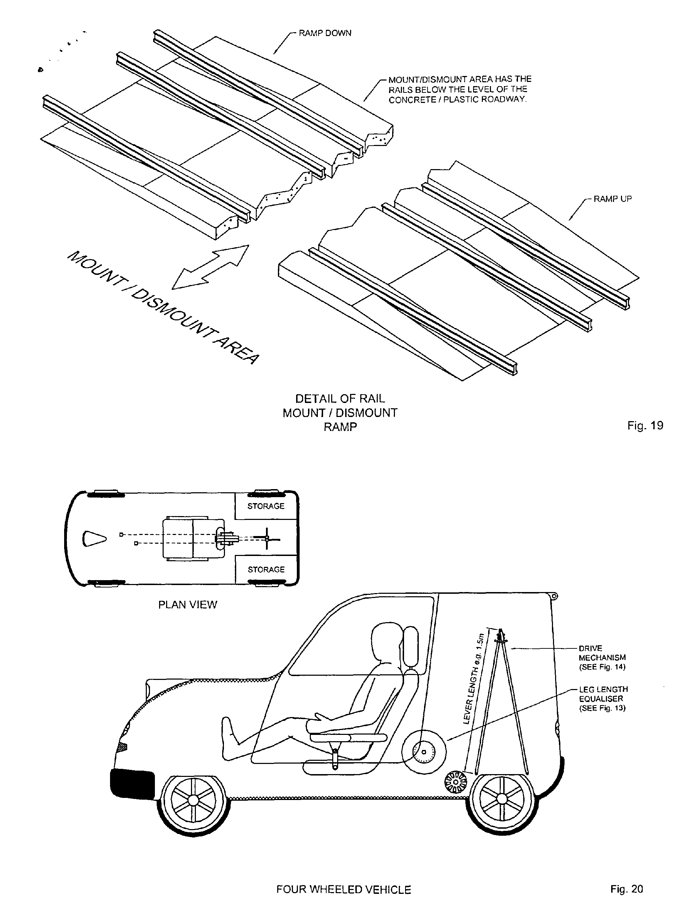

Figure 19 shows a detail of the ramps that enable the vehicles to join and leave the rails, and
Figure 20 shows a cross-section of the vehicle of the present invention, and particularly some of its individual features.

### Description of the Preferred Embodiments

The preferred embodiments of the invention are human-powered vehicles with two or more wheels and are powered by a system of levers which may be longer than is available on a conventional 'rotary-drive' bicycle, so as to enable the driver to take advantage of the theoretically increased torque provided by this system. They will offer a cruising speed that renders them suitable for regular practical use. (In the case of two-wheeled vehicles, 'outrigger' wheels will preferably be provided, which will be lowered either at the control of the driver or automatically when the road-speed falls below e.g. 10 mph). The vehicles will be protected by bodywork against weather and impact, and will have appropriate amenities as provided in contemporary automobiles. They may have wheels that combine conventional pneumatic tyres with flanged wheels of the type used on railways. They may have the possibility of drawing power from an electric battery that may be totally or partially charged by the movements of the drivers. The vehicles may possess "regenerative braking", where the energy created by the action of braking is returned to a battery for storage and use.

Boats, light aircraft and electricity generators may also be driven by a system of levers that are longer than is available on a conventional 'rotary-drive' bicycle, and which enable the sailor, pilot or operator to take advantage of the theoretically greater torque offered by this system.

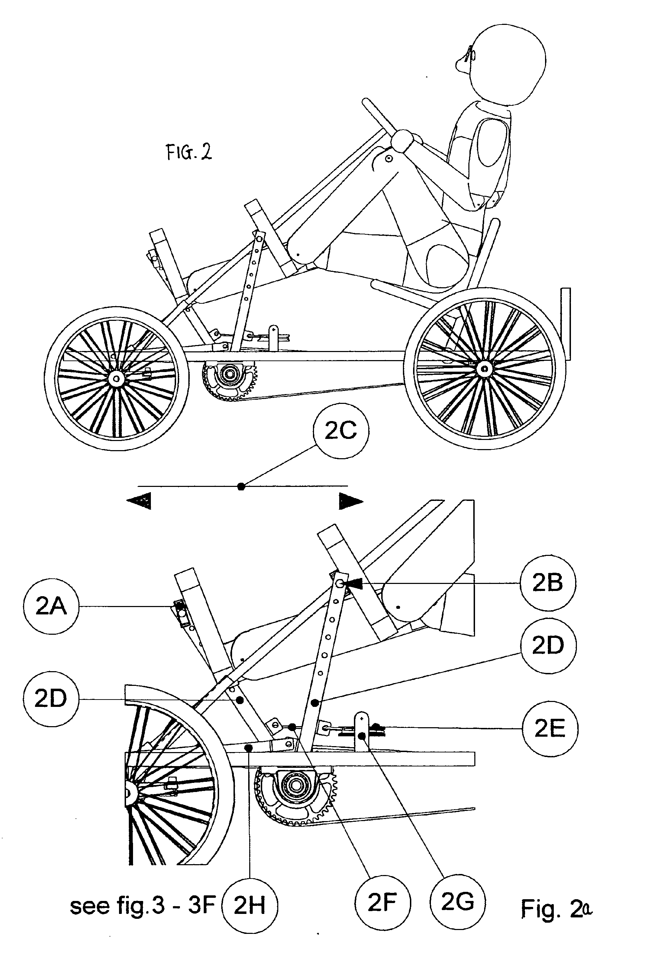

Detailed reference will first be made to the vehicle shown in Figures 2 and 2a. This includes a wheeled frame on which is mounted a seat for the driver. Two levers 2D are pivotally mounted on the frame for rotation about a common axis and pedals 2A are mounted on the levers 2D adjacent the tops thereof by means of pivots 2B. The driver moves his legs backwards and forwards, as indicated by the arrow 2C, and exerts a driving force during forward movement of each leg, while the levers 2D free-wheel during their return movements, such free-wheeling being afforded by means of a clutch or the like (not shown). A drive sprocket is mounted on the frame for rotation about the common axis of the levers 2D and the arrangement is such that, when one of the levers 2D is moved forwardly by extension of the driver's legs, the drive is transmitted to the sprocket. Return movement of the levers 2D does not produce movement of the sprocket.

Such return movement of the levers 2D can be produced by means of pneumatic piston and cylinder mechanisms 2H connected to the levers 2D, or by equivalent spring systems, or by connecting the levers 2D together by means of a cable 2F that passes over a pulley 2E carried by an upwardly extending stem 2G mounted on the frame. Part of the energy used in extension of the driver's legs to pivot the levers 2D is thus either stored in the pneumatic or spring return system or is used via the pulley and cable mechanism 2E, 2F to effect return movement of the other lever 2D.

As shown in the drawings, the pedals 2A for engagement by the feet of the rider are pivotally mounted on the levers 2D at the upper ends thereof and the heels of the rider can be supported by suitable footrests (not shown). The levers 2D are typically arranged for pivotal movement from a position spaced angularly a predetermined amount from the vertical to a position spaced substantially the same angular amount on the other side of the vertical.

The part of the seat that supports the weight of the rider of the vehicle is at substantially the same height as the pedals 2A so that the legs of the rider move substantially horizontally during extension thereof and during return movement thereof.

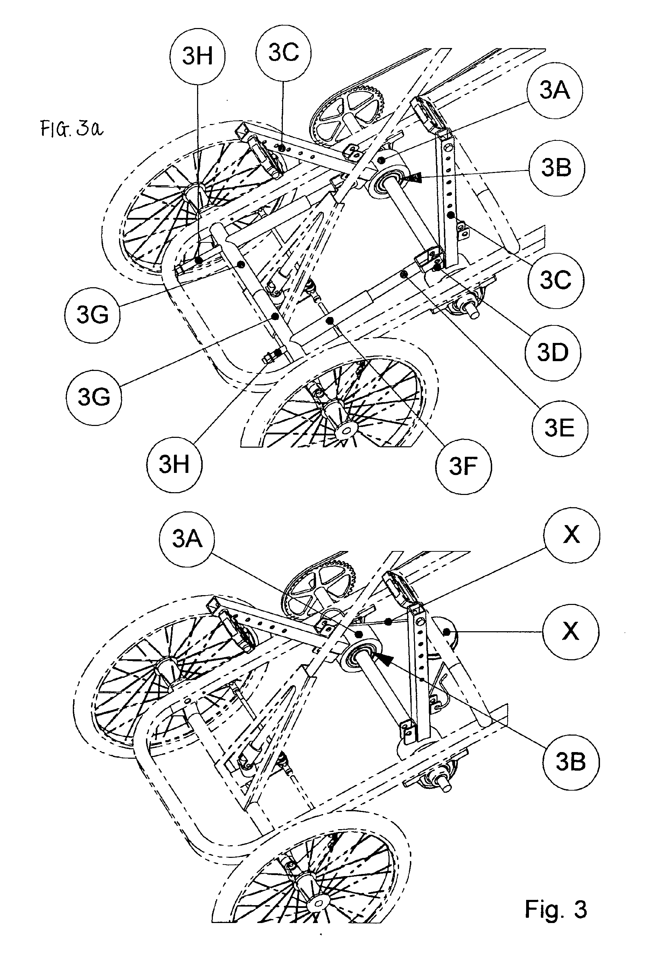

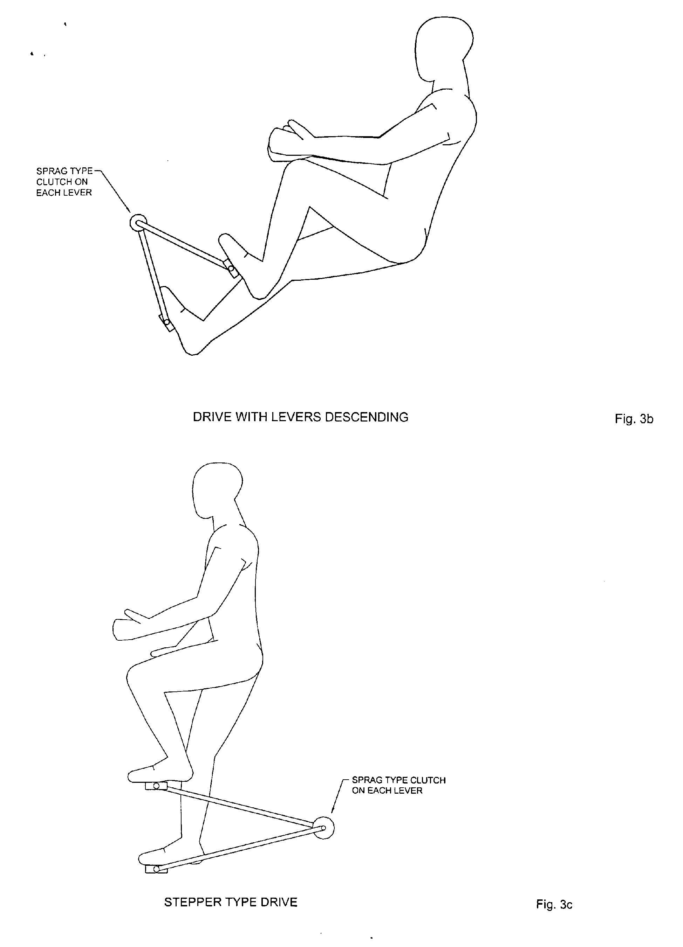

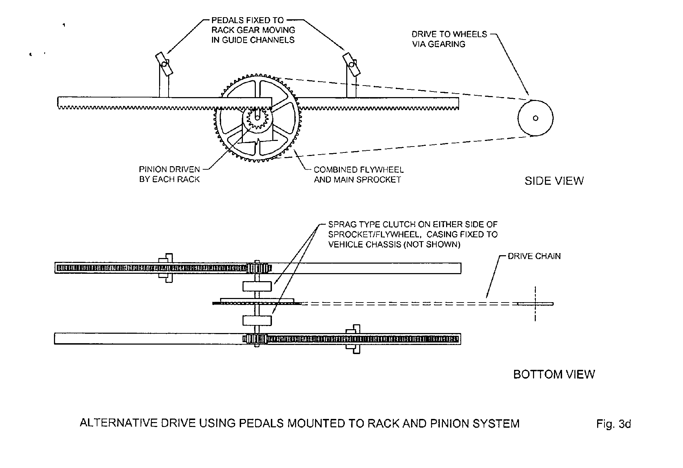

Figures 3 and 3a show alternative designs for providing return movements of the levers 3C. Each lever 3C is mounted on a transverse shaft by means of a collar 3A containing a one-way clutch 3B and each lever 3C is provided with a bracket 3D. In one arrangement, the brackets 3D are connected to telescopic piston and cylinder mechanisms 3E, 3F mounted at 3H on the front axle 3G of the vehicle. In the other arrangement, the levers 3C are connected by a cable that passes over a pulley X such that, movement of one of the levers 3C in the forward direction produces return movement of the other lever.

The embodiments shown in Figures 3b, 3c and 3d operate in the manner shown in the drawings.

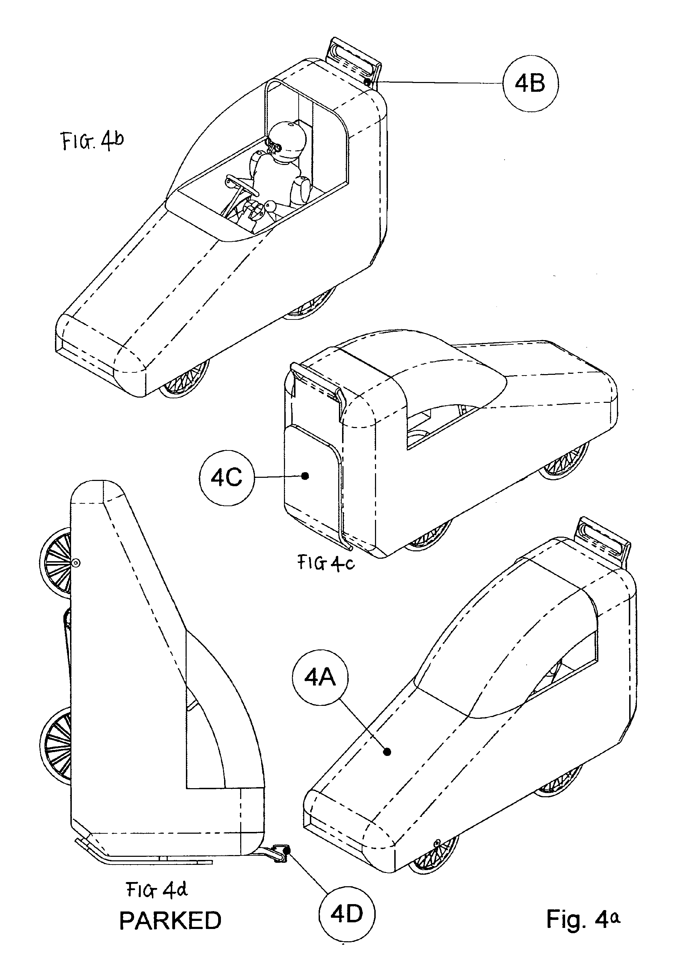

Figure 4 shows possible bodywork designs for a single-person vehicle.

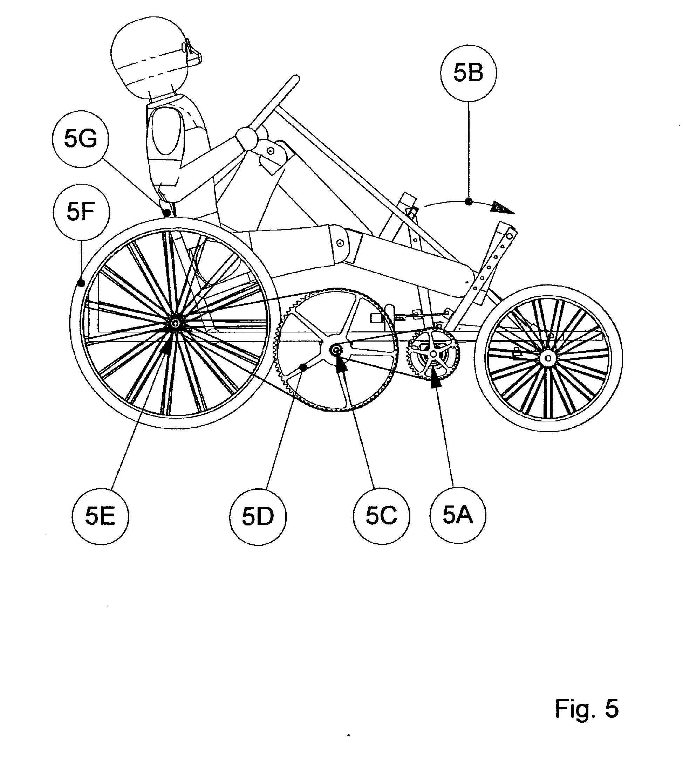

In Figure 5, an arrangement is shown in which pivotal movement of the levers, as indicated by the arrow 5B, on extension of the rider's legs, produces rotation of a first sprocket 5A, which is connected by a chain drive 5C to a second sprocket 5D. The second sprocket 5D is connected by a chain drive 5E to the rear wheel 5F of the vehicle. The rider sits on and is supported by the seat 5G, which includes a backrest.

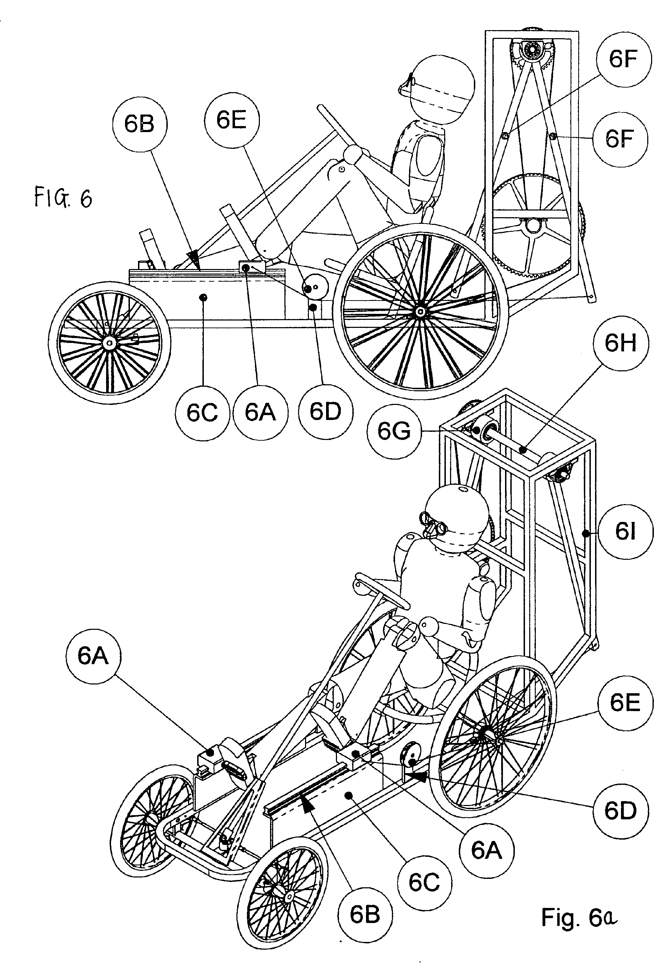

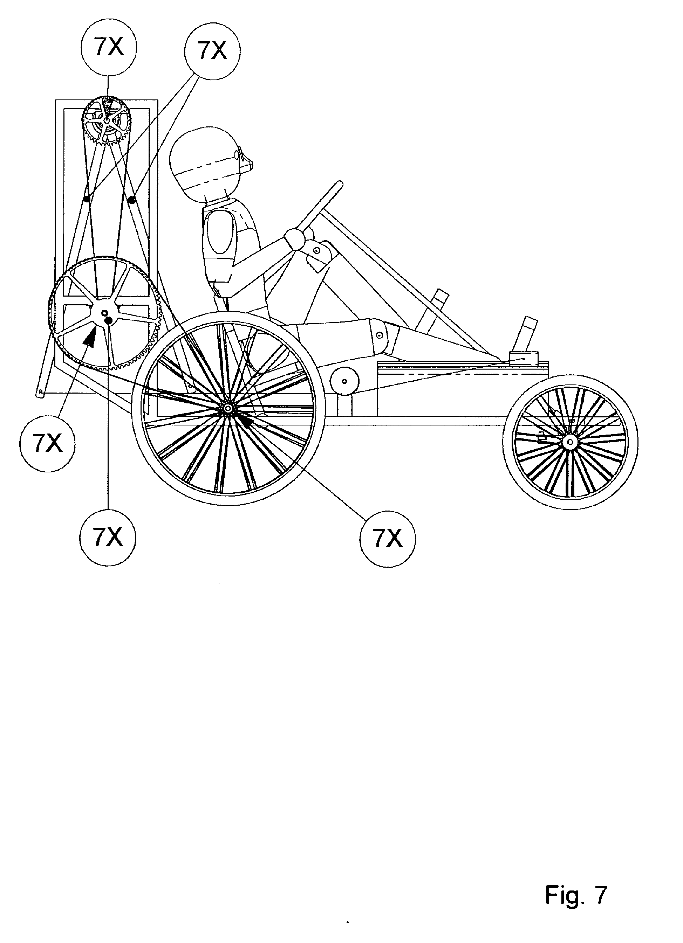

Figures 6, 6a and 7 show a vehicle in which the rider's feet rest on pedals that are connected to slide blocks 6A that are movable along a rail 6B of a slideway 6C. The slide blocks 6A are connected by cables to a pair of pivotally mounted levers 6F disposed at the rear of the vehicle, the levers 6F being arranged for movement about the axis of a shaft 6H supported on a frame 6l. The cables connected to the slide blocks 6A pass under guide rollers 6E mounted on support brackets 6D.

The levers 6F are connected to the shaft 6H by collars 6G that contain one-way clutch mechanisms and the arrangement is thus such that each forward movement of a slide block 6A produces rotational movement of the shaft 6H. A first sprocket is mounted on the shaft 6H and the first sprocket is connected by a chain drive to a second sprocket disposed at a lower level than the first sprocket. The second sprocket is connected by a chain drive to the rear wheels of the vehicle.

The levers 6F and/or the slide blocks 6A may have return mechanisms (not shown) attached to them.

A leg length equaliser disc may be provided, as shown in Figures 13a, 13b and 13c. In its connection with the pedals (see Figure 13a) by means of a belt, chain or cord of suitable material, this dual-action disc enables the driver to select an extent of length of forward push (x1 to x) which matches the distance between his/her foot in its retracted position and his/her foot in the extended position (distance z). This is achieved by selecting the appropriate one of a variety of available anchoring points on the disc (y1 on the drawing), and attaching said belt, chain or cord to this anchoring point, so that at the beginning of a power stroke, the driver's leg is in a comfortable 'start position', and at the end of the power stroke (y on the drawing), the driver's leg is in a comfortable 'end position'. Circumferential distance y1 to y will thus be substantially equal to linear distance z. Attachment of said belt, chain or cord will be made provisionally by a bolt terminating in a wing-nut (as shown on the drawing), or by some more permanent method, such as a rivet, or an adapted wheel-nut.

Simultaneously, in its connection to the drive-levers (see Figure 13b) by means of a belt, chain or cord of suitable material, this dual-action disc provides a single length (v1 to v) along a set proportion of its circumference, which ensures that the levers are always moved through the distance (a1 to a - length b) which is most suitable for forward propulsion with the current configuration of the levers. Circumferential distance v1 to v is thus substantially equal to linear distance b. (Please note that no variety of attachment points is shown on this part of the leg-length equaliser disc, because it is assumed that the drive-lever specifications of the vehicle are fixed. If the drive-lever specifications vary, there may be reasons to introduce a variety of attachment-points as shown on the other section of the disc in Figure 13a.

The leg-length equaliser disc thus ensures that the individual's full leg-movement will result in a complete forward movement of the drive-levers whatever his/her physical stature.

Figure 13c is a plan view of the leg-length equaliser disc in order to clarify the concept that, seen in plan view, the vehicle of the invention has two double-action discs. These discs are mounted in tandem, and are separated by a central divider. Each of the driver's legs operates a pedal that is linked to its own leg-length equaliser disc that is linked in turn to its own drive-lever.

In practice it has been noticed that, as the drive-lever is lengthened, the circumferential arc available for engagement by the sprag clutch (the 'arc of engagement') at the centre of the circle described by the end of the levers becomes proportionally shorter. In the case of a sprag clutch with a diameter of say 35 mm., this can create the practical disadvantage that the beginning and end of the driver's power stroke are wasted in the 'take-up' and 'release' of the sprag clutch.

In order to overcome the limitations of the short 'arc of engagement' as described above a mechanism is proposed (see Figure 14 whereby a curved toothed rack is attached to each drive lever at a suitable point (which might be approximately 100 mm. from the point of each drive lever which is closest to the lever pivot axle). Each drive lever swings on a lever pivot axle that may contain an adjustable torsion spring (or has some other effective means of automatic return, such as spring means, reversing levers or pneumatic means, as shown in Figure 13b). In order to ensure controlled forward and back movement of the drive levers, they are held within guides. The guides contain stop buffers of rubber or a similar impact-reducing material.

The forward drive of the motion of each rack is transmitted to its own pinion wheel, which is mounted on its own one-way (sprag) clutch, which conveys the forward rotary motion to a drive axle. This drive axle is common to both sides of the drive mechanism, and receives forward rotary motion in turn from each drive lever.

Mounted on this drive axle is a sprocket, whose rotational movement is furthered by a flywheel, which is equipped with a brake in case an emergency stop is required. Drive from the above sprocket is communicated to the axle that drives the wheels of the vehicle by means of a chain, a toothed belt or a similar continuous drive apparatus via suitable gears. In view of the potentially high torque loading, these gears may need to be strengthened by comparison with conventional bicycle gears.

Return of the drive levers can be by a controllable torsion spring. As there may be difficulty in matching the return speed of the leg-length equaliser disc, it may be preferable to use a return-lever mechanism, or a chain held in a guide, so that the forward movement of the 'active' lever pulls the 'inactive' lever back into the start position.

The means for the transmission of drive from the sprocket to a wheel of the vehicle may comprise an additional sprocket and chain system or other type of transmission and gearing, and may incorporate reduction gears or a gearbox, so that an increased drive ratio is obtained, together with the benefits of selectable drive ratios.

In order to obviate the need for a 'differential', which is cumbersome and inefficient in conjunction with a chain drive, forward drive to the two driven wheels may comprise a first pair of sprag clutches, which, when attached to the wheel-hubs and located on the driven axle, ensure that forward drive is transmitted only to the driven wheel on the outside of the turning circle. Similarly, a second pair of sprag clutches giving drive when rotated in the contrary direction to the above, will serve for reversing.

It is envisaged that the vehicles will be fitted with a forwardacting sprag clutch, and a reverse-acting sprag clutch to power each driven wheel (see Figure 16).

There may also be provided (see Figure 20):
a) a device such as a selectable focused sound beam transducer producing a concentrated beam of low-level sound. The vehicle of the present invention will be very silent, so a warning sound will be helpful for pedestrians and cyclists. It is desirable that this sound should be concentrated in front of the vehicle so that it is not a nuisance for people living in houses adjoining the roadways used by the vehicles. It is also desirable that the concentrated beam should be steerable, i.e. that the direction of the beam is changed on turning of the vehicle steering means.
b) a headlight whose angle in relation to the horizontal and/or whose intensity will be capable of being adjusted automatically or by the driver according to the road speed, with a preference for the light to be raised more towards the horizon at higher speed, and more dipped down at lower speed. A facility for the light to turn from side to side as the front wheels turn will also be useful, and will give especially good vision if the vehicle has a single central headlight with a beam slightly wider than the width of the vehicle;
c) an electricity generator/alternator and battery, together with lights (including 'day-running lights') and other electric apparatus as provided on contemporary automobiles, with or without an electric motor and controller to provide all or some of the motive force at the choice of the rider/driver. This may be particularly appropriate in the case of a multi-person vehicle, where the energy input is not all under the control of the rider/driver, but accepted road practice demands that the vehicle should be controlled by a single person. It should be possible to provide direct charge to the battery during forward motion (as with a conventional bicycle generator), by operation of the drive mechanism in neutral while at a standstill, or by connecting the battery (which must be 'rechargeable') to an external power-source, either whilst it is in the vehicle or whilst it is removed from the vehicle. "Regenerative braking" may be provided;
d) a flywheel or other mechanical means of storing energy, together with a power take-off or clutch, or other means of utilising the stored energy in a controlled manner as in a. above;
e) bodywork to reduce air-resistance and the effect of adverse winds and to give weather- and impact-protection, (preferably including an impact-protecting framework), windows, storage space, mirrors, and other appropriate amenities as found in contemporary automobiles. The vehicle will preferably be constructed of lightweight materials, which will have sufficient strength since the human occupant(s) will be the heaviest item(s) in the vehicle;
f) as the vehicle is designed to be human-powered, the driver will be warmed by his/her own bodily exercise. Removable upper insulation is proposed to allow a choice of retaining or removing warmth. Permanent lower insulation is proposed to protect the driver from effect of the heat or cold of the road-surface. A selectable on/off ventilation system including louvers on the air-entry is also proposed, since in really cold weather it may be advantageous to prevent entry of almost all air to the vehicle. In addition to the conventional air-intakes, it may be beneficial to provide an air-extraction fan at the rear of the vehicle. This will ensure a thorough flow of cooling clean air more effectively than the present conventional method of blowing air into the front of the vehicle and allowing it to find an exit where it can. Plastic construction will be of benefit because of the lower thermal conductivity of plastics by comparison with traditional metallic materials used in motor vehicles.
   Obviously, an electric air-heater could be fitted. However, this will be a drain on the battery. Unlike a motorcar driver, the driver of the vehicle of the invention will be able to exercise while the vehicle is at rest. By placing the vehicle in neutral and moving the pedals and levers back and forth, the driver will be able to keep warm, and charge the vehicle's battery at the same time.
g) as the rider needs to exert power pushing with the legs, it is advantageous to provide a supportive seat/back-stop. It is also advantageous to provide handgrips so that the arms can brace the body during the pushing movement. The controls (electrical, hydraulic, mechanical or a combination of the above) can be incorporated in these grips.
h) in order to facilitate vertical parking in suitably prepared places, it will be advantageous to provide an attachment point for a lock or grip at the top of the rear of the vehicle, and a combination rolling-point and bumper at the bottom of the rear of the vehicle.

In static tests of a vehicle as shown in Figure 2, with a lever length of 150 mm., it was found that a horse power rating of 1 HP was easily achieved by an ordinarily fit person - not an athlete. It was noted that the 25 mm. Sprag clutches were responsive and required a minimum of momentum to engage. As a result, a positive drive was obtained for almost 100% of the time and a 25 kg. weight could be lifted smoothly and uninterruptedly.

By contrast, the same person using a conventional bicycle rig of rotational configuration - and also with lever lengths of 150 mm. - could only produce an up-and-down motion and no Horse Power rating could be measured. Given an equally responsive Sprag clutch or similar device, it would be logical to anticipate a Horse Power rating multiplied by up to 10, i.e. 10 Horse Power, from a similar device having a lever length of 1,500 mm. ― as per the embodiments shown in Figures 6 and 14. If it is practicable to increase the length of the lever still further, while maintaining the responsiveness of the Sprag clutch or similar device, further corresponding multiplications of torque and Horse Power can be anticipated.

In this context, the concept of using as long an "arc of engagement" as possible, as described with reference to Figure 14, becomes extremely important. With a limited forward movement of the rider's leg, the angle at the apex of the levers becomes smaller as the levers become longer, and any loss of contact between the driving Sprags and the inner housing becomes more of a hindrance to smooth forward movement.

A further feature of the present invention is the provision of a carriageway designed for the safe operation of the vehicles (see Figure 11). This carriageway may be enclosed, and of generally tubular section, in order to provide protection against wind and weather. If it is enclosed, it may be beneficial to provide clerestory roof lights, and/or active or passive ventilation (e.g. high and low-level air-vents - possibly louvers which can open and close automatically according to the information received from thermometers, wind-speed and wind-direction monitors etc), windows (preferably overhead, not lateral, in built-up areas, to ensure privacy for adjoining residents), lighting and varying types of insulation depending on the prevailing weather conditions.

As the vehicles enclosed will be human-powered, it will be particularly important to provide a reasonably cool environment, and fresh, changing air. It is anticipated that under normal circumstances the provision of openable louvers at low and high level will facilitate this by virtue of the fact that air rises when heated (e.g. by the heating effect of the drivers' bodies, the friction of movement, and the warming of the whole enclosed carriageway by the sun).

If the enclosed carriageway provides for uni-directional traffic, it will be beneficial to provide for air-vents which are so oriented that wind blowing into them will always be directed in such a way as to assist, not hinder, forward movement. It may also be advantageous to provide for automatic opening and shutting of vents and windows according to temperature and other sensors, and to provide solar panels as power sources.

Interior lighting (preferably using low-energy equipment) may also be provided, and information displays using lights, liquid crystal displays or other practical means will be useful for providing information for the users.

Use of this carriageway may be free of charge or subject to tolls. In order to facilitate the identification of vehicles generally (from the points of view of a) the owner's recognition of his or her vehicle when parked, and b) theft prevention and/or the tracking of vehicles for general police purposes) and specifically for vehicles using the carriageways and to enable the speedy issuing of invoices, each vehicle may be provided with one or more implanted microchips or barcodes. A dedicated reading device will then be provided to enable the toll-charging organisation to render regular invoices, e.g. monthly invoices, to the owners of the vehicles with minimal personnel, as happens at present in the case of the providers of mobile phone services. An appropriate device may be provided to the owner of each vehicle to enable him or her to send a signal to a control device in the vehicle to enable him or her to unlock the vehicle doors and engage the vehicle drive mechanism.

The carriageway may be raised so that it can be sited above and/or alongside existing motorways, roadways, rivers, bridges, bicycle-tracks, railways and other engineering features and may also be able to make direct progress where contemporary roads are forced to rely on multiple chicanes.

A constant feature of present man-powered travel is the negative effect on speed of uphill gradients. A cyclist capable of 25 mph on a level surface may be reduced to under 10 mph on an uphill incline, and may even be forced to dismount and walk uphill, pushing the bicycle with him. Electric devices are currently marketed to give extra power in this circumstance. Progress is much easier, and less tiring, on a level or slightly downhill roadway.

One of the features envisaged in the carriageway of the invention is the liberation of the driver from the effort of uphill roadways. Thus, in the case of journeys involving significant gradients, a separate carriageway be provided for each direction.

Many of the world's cities were originally built on rivers or harbours, and the areas contiguous with the waterfronts are by definition at a comparatively low level. In many cases, the cities have developed onto surrounding hills, and residential areas have been built at higher levels, while many of the 'office' areas remain at the lower level of the earlier city. From the point of view of a person who wishes to 'commute' to work using his or her own power, there is the following disadvantage: in the morning, when the person is refreshed by rest and sleep, the general gradient is downhill, and the effort required is not great; in the evening, when the mind and body are tired from work, the effort is much greater. The result of this is a strong disincentive to commute using human power.

Figure 18 shows a cross-section of a typical city, using London as an example, with Hampstead quoted as the raised residential area, and Westminster as the lower-lying office area.

In the case of a city, its existing topography will often provide a generally downhill gradient from the residential area to the centre (see unbroken line). For the journey from the lower level to the upper level (see broken line), it is suggested that assistance be provided by means of lifts or escalators (as in underground railways) in order to ensure that the returning commuters travel on a level or slightly downhill gradient. From the point of view of overall energy use, the consumption of a number of constantly travelling electrical devices will compare favourably with that of a multiplicity of powered vehicles that are constantly stopping, restarting, slowing and accelerating.

People travel to many different areas in a city, so several points are shown (marked 'ENTRANCE & EXIT') for entering and leaving the carriageways. In the case of raised carriageways, it may be desirable to provide lifts or escalators at entrance points.

People travel in many directions in cities. A web-like structure of carriageways may, therefore, be advantageous, like the present structures of bus-routes and underground railways that serve the needs of city-dwellers.

For cross-country use, the same principles will apply, with assistance at the relevant points, in order to provide a generally level, or slightly downhill roadway, where desirable.

A further feature of the present invention is the provision of a vehicle with dual-purpose wheels (see Figures 16 & 20). These have both pneumatic tyres (for tarmacadam, concrete and other roadway surfaces), which are preferably mounted to the 'inboard' side of the wheel, and lightweight smooth solid surfaces with flanges (for running on rails), which are preferably mounted on the outer surface of the wheel, are of smaller diameter than the tyre, and may form part of the construction of the wheel. Less energy is required to power a vehicle on rails than on pneumatic tyres and conventional roadway surfaces, because there is less friction between the wheels and the surfaces on which they run. This will thus help to maximise the effectiveness of the driver's effort.

Because braking a vehicle on rails is difficult, as a result of the lack of friction (which is an advantage for reducing the energy required for forward motion), it may be advantageous to provide the outer edges of the wheels, which are not in contact with the flanges on the wheels, with a knurled, vertically ridged or otherwise irregular surface, and to fit the vehicles with brake pads positioned so as to act on these outer edges. Alternatively, an extra knurled rail could be provided to receive pressure from such brakes.

The dual-purpose wheels may be used on a four-wheeled vehicle of the invention (as shown in Figure 20).

Figure 11a shows a cross-section of a uni-directional carriageway containing one section for bicycles (without rails) and two lanes for four-wheeled vehicles of the invention (with rails). Each lane for four-wheeled vehicles contains three rails. The narrower pair of rails provides a railway for a single-seat four-wheeled vehicle of the invention or a multiple-seat four-wheeled vehicle of the invention in which the users sit in tandem. The wider pair is for a vehicle designed for more than one person sitting abreast.

In order to enable the vehicle to enter or leave the rails, the carriageway will be provided with raised sections between the rails (see Figure 19). The driver will be instructed to travel slowly as the vehicle reaches these sections. The road-tyres of the vehicle will rise in contact with the ramps, and the vehicle will be lifted above the rails at these points. It will then be possible to turn the vehicle into another direction, possibly choosing a railway section, or a conventional roadway, as the driver chooses.

Because the vehicles in accordance with the present invention will be comparatively light, the carriageway may also be comparatively light, which should entail considerable cost-efficiencies in its foundations and structure, and should enable it to be used in settings where conventional roads, bridges and viaducts are impractical or uneconomical. It is envisaged that apart from a steel framework, the carriageway could be of plastic construction. Because of its lightness, it could be attached to existing structures without a need for significant strengthening to these structures. It may also be able to give direct access to sizeable buildings, such as office blocks, which have been adapted for this purpose. This may be on or above ground level.

Similarly, a lightweight car park for vehicles in accordance with the present invention could be cheaply provided, and would be able to take large numbers of vehicles, especially when these are parked vertically. Appropriate areas could be provided in existing multi-storey car parks, and use could be made of existing industrial mechanised storage and retrieval systems (for example, warehouse storage, selection and retrieval-systems).

Service areas, like present motorway service stations, could be provided for the vehicles in accordance with the present invention. These could adjoin ground-level roadways, or higher-level carriageways.

The preferred embodiments of the invention are human-powered vehicles with two or more wheels, and which are powered by a system of levers which may be longer than is available on a conventional 'rotary-drive' bicycle, and which enable the driver to take advantage of the theoretically increased torque provided by this system. They will offer a cruising speed that renders them suitable for regular practical use. (In the case of two-wheeled vehicles, 'outrigger' wheels will preferably be provided, which will be lowered either at the control of the driver or automatically when the road-speed falls below e.g. 10 mph). The vehicles will preferably be protected by bodywork against weather and impact, and will have appropriate amenities as provided in contemporary automobiles. They may have wheels that combine conventional pneumatic tyres and flanged wheels of the type used on railways. They may have the possibility of drawing power from an electric battery, which may be totally or partially charged by the movements of the driver, and which may give propulsive assistance.

Boats, light aircraft and electricity generators may be driven by a system of levers which may be longer than is available on a conventional 'rotary-drive' bicycle, and which enable the sailor, pilot or operator to take advantage of the theoretically greater torque offered by this system.

## Claims

1. A human-powered wheeled vehicle having a wheeled frame, a seat for the rider of the vehicle, a pair of levers arranged for pivotal movement about a common axis, a sprocket arranged for rotation about said common axis with an idler to reverse the direction of drive, clutch means whereby movement of a lever in a first direction about the common axis is transmitted to the sprocket whereas movement of a lever in a direction opposite to said first direction is not transmitted to the sprocket, means for the transmission of drive from the sprocket to a wheel of the vehicle, and sliders movable along slideways, the sliders being connected to the levers and the arrangement being such that, when the rider is sitting on the seat, the rider's feet can act on the sliders to effect movement of the levers so that alternate extension of the driver's legs results in alternate pivotal movement of the levers.

2. A human-powered vehicle as claimed in Claim 1, in which the connections of the sliders to the levers comprise belts or cords.

3. A human-powered vehicle as claimed in Claim 1 or Claim 2, in which means are provided for moving the sliders in the direction opposite to that in which they are moved on extension of the rider's legs so that, after completion of a working movement of one leg by the rider, that leg and the relevant lever are returned to their original position, and in which the other leg of the rider is extended by the rider while the one leg is being returned to its original position.

4. A human-powered vehicle as claimed in any one of the preceding claims, in which the slideways are arranged horizontally and are so located that the part of the seat that supports the weight of the rider of the vehicle is at substantially the same height as the slideways.

5. A human-powered wheeled vehicle having a wheeled frame, a seat for the rider of the vehicle, a pair of levers arranged for pivotal movement about a common axis, a sprocket arranged for rotation about same common axis, clutch means or other means whereby movement of a lever in a first direction about the common axis is transmitted to the sprocket whereas movement of a lever in a direction opposite to said first direction is not transmitted to the sprocket, and means for the transmission of drive from the sprocket to a wheel of the vehicle, the arrangement being such that, when the rider is sitting on the seat, the rider's feet can act on the levers so that alternate extension of the driver's legs results in alternate pivotal movement of the levers.

6. A human-powered vehicle as claimed in Claim 5, in which means are for moving the levers in the direction opposite to the first direction so that, after completion of a working movement of one leg by the rider, that leg and the relevant lever are returned to their original position and in which the other leg of the rider is moved by the rider through a working movement while the one leg is being returned to its original position.

7. A human-powered vehicle as claimed in Claim 5 or Claim 6, in which pedals for engagement by the feet of the rider are pivotally mounted on the levers at the upper ends thereof and in which the levers are arranged for pivotal movement from a position spaced angularly a predetermined amount from the vertical to a position spaced substantially the same angular amount on the other side of the vertical.

8. A human-powered vehicle as claimed in any one of claims 5 to 7, in which the part of the seat that supports the weight of the rider of the vehicle is at substantially the same height as the pedals so that the legs of the rider move substantially horizontally during extension thereof and during return movement thereof.

9. A carriageway for powered vehicles substantially as hereinbefore described with reference to and as shown in any one of the relevant figures of the accompanying drawings.

10. The combination of a human-powered vehicle as claimed in any one of Claims 1 to 8 and a carriageway for powered vehicles having any one or more of the novel features hereinbefore described and/or illustrated in the accompanying drawings.
